(19) Europäisches Patentamt
European Patent Office
Office européen des brevets

(11) **EP 2 626 989 B1**

(12) **EUROPÄISCHE PATENTSCHRIFT**

(45) Veröffentlichungstag und Bekanntmachung des Hinweises auf die Patenterteilung:
**26.08.2020 Patentblatt 2020/35**

(51) Int Cl.:
***H02K 15/02*** *(2006.01)*

(21) Anmeldenummer: **13154126.0**

(22) Anmeldetag: **06.02.2013**

(54) **Verfahren zur Herstellung eines Rotors sowie Rotor**

Method for producing a rotor and rotor

Procédé destiné à la fabrication d'un rotor et rotor

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2012 DE 102012202018**

(43) Veröffentlichungstag der Anmeldung:
**14.08.2013 Patentblatt 2013/33**

(73) Patentinhaber: **KSB SE & Co. KGaA**
**67227 Frankenthal (DE)**

(72) Erfinder:
• **Bosbach, Franz Gerhard**
**67251 Freinsheim (DE)**
• **Gontermann, Daniel**
**67227 Frankenthal (DE)**
• **Könen, Michael**
**64625 Bensheim (DE)**

(56) Entgegenhaltungen:
**DE-A1- 1 814 383       DE-A1- 2 937 351**
**JP-A- H09 117 084**

EP 2 626 989 B1

**Beschreibung**

Die Erfindung betrifft ein Verfahren zur Herstellung eines Rotors für einen Synchron-Reluktanzmotor.

Ein derartiger Rotor besteht regelmäßig aus einem Blechpaket, das sich aus einer Vielzahl von aufeinander gestapelten Elektroblechen zusammensetzt, die jeweils eine spezifische Blechschnittgeometrie mit Flussleit- und Flusssperrabschnitten aufweisen. Dieser Aufbau soll vor allem der Vermeidung von Wirbelströmen dienen, die während des Motorbetriebs innerhalb des Rotors auftreten können und sich negativ auf den Motorwirkungsgrad auswirken.

Bisher ist es aus dem Stand der Technik bekannt, das Rotorblech sowie den Stator während eines gemeinsamen Stanzvorgangs aus dem verwendeten Material herauszustanzen. Beide Motorteile basieren folglich auf identischen Materialen. Zudem kann das Rotorblech auch mittels eines kombinierten Verfahrens aus Stanzen und Laserschneiden produziert werden.

Nachteilig an den bekannten Verfahren ist jedoch, dass diese nur eine bedingte Flexibilität hinsichtlich der geometrischen Ausgestaltung des Rotors während des Herstellungsverfahrens zulassen. Insbesondere die Modifizierung des Herstellungsverfahrens bezüglich der Flussleit- und Flusssperrabschnitte ist aufwendig und daher unbefriedigend.

Die JP H09 117084 A zeigt ein gattungsgemäßes Verfahren zur Herstellung eines Synchron-Reluktanzmotors. Die DE 18 14 383 A1 zeigt eine dynamoelektrische Maschine mit Reluktanzwirkung. Die DE 29 37 351 A1 zeigt einen Reluktanzmotor mit geblechtem Segmentläufer und ein Verfahren zu dessen Herstellung.

Ziel der Erfindung ist es, ein Verfahren aufzuzeigen, das eine optimale Anpassung des Herstellungsprozesses an die erwünschten Rotoreigenschaften ermöglicht.

Diese Aufgabe wird durch ein erfindungsgemäßes Verfahren zur Herstellung eines Rotors für einen Synchron-Reluktanzmotor gemäß den Merkmalen des Anspruchs 1 gelöst. Die konkrete Ausführung des mehrschichtigen Materials sowie des ausgeführten Wicklungsvorgangs bieten zusätzliche Freiheitsgrade, um möglichst flexibel auf die spezifischen Rotoreigenschaften eingehen zu können, da diese insbesondere von der geometrischen Ausprägung der leitenden und nichtleitenden Bereiche des resultierenden Rotorkörpers abhängig sind. Das gesamte Herstellungsverfahren wird dadurch nicht nur wesentlich flexibler, sondern auch deutlich vereinfacht.

Die einzelnen Lagen werden miteinander verbunden. Dies kann beispielsweise durch den reinen Wicklungsvorgang erfolgen oder mittels eines gesonderten Verbindungsverfahren. Besonders geeignet ist eine stoffschlüssige Verbindung zwischen wenigstens einem Teil der Lagen. Die Stoffschlüssigkeit kann optional in einem zweiten Prozessschritt erfolgen, beispielsweise durch Erhitzen, Infiltrieren oder dergleichen.

Zusätzlich kann eine formschlüssige Verbindung durch das Aufbringen wenigstens eines Spaltrohres erzielt werden.

Der Grundkörper zur Aufnahme der Wicklung ist vorzugsweise zylindrisch ausgeformt. Der Grundkörper ist jedoch nicht zwingend zylindrisch ausgeführt. Generell ist jede beliebige geometrische Form denkbar, insbesondere beliebige Polyederformen, beispielsweise mit sechseckiger Querschnittsfläche oder dergleichen.

Möglich ist es auch, die Wicklung direkt auf der Motorwelle des Synchron-Reluktanzmotors vorzunehmen.

Erfindungsgemäß ist eine Ausführung des mehrschichtigen Materials derart, dass mindestens zwei magnetisch nichtleitende Schichten vorgesehen sind, zwischen denen eine magnetisch leitende Zwischenschicht eingebettet ist. In der ersten Wicklungslage kontaktiert folglich eine nichtleitende Schicht den Grundkörper. Jeweils zwei magnetisch nichtleitende Schichten der benachbarten Lagen des mehrschichtigen Materials werden jeweils stoffschlüssig miteinander verbunden.

Bevorzugt ist der Einsatz eines Laminats als mehrschichtiges Material mit der voranstehend beschriebenen Schichtstruktur. Die Länge des Laminats kann so gewählt werden, dass eine variable Rotorlänge realisiert werden kann. Zweckmäßig können mehrere Bahnen aus dem mehrschichtigen Material in axialer Richtung nebeneinander auf den zylindrischen Körper gewickelt werden.

Um dem Auftreten von Wirbelströmen in axialer Richtung des Rotors entgegenzuwirken, kann eine Unterbrechung der magnetisch leitenden Zwischenschicht des Laminats in axialer Richtung des zylindrischen Körpers vorgesehen werden. Vorzugsweise kann die magnetisch leitende Zwischenschicht mehrfach in axialer Richtung unterbrochen sein.

Als Alternative zur bevorzugten Ausführungsform des erfindungsgemäßen Verfahrens kann anstatt des Laminats auch ein isolierter Flachdraht Verwendung finden. Dieser Draht besteht aus einem idealmagnetisch leitfähigen Material und ist zumindest teilweise, vorzugsweise vollständig, von einem isolierenden Material umgeben. Analog zur Verwendung des Laminats werden die einzelnen Wicklungslagen, das heißt die einzelnen Flachdrahtlagen, ebenfalls stoffschlüssig miteinander verbunden. Durch den Einsatz eines Flachdrahtes kann besonders flexibel auf die resultierende Breite und Dicke des Motors eingegangen werden.

Für die Herstellung einer stoffschlüssigen Verbindung zwischen den einzelnen Wicklungslagen wird bevorzugt ein geeigneter Aktivator eingesetzt. Je nach Ausprägung der Isolationsschichten des mehrschichtigen Materials muss ein passender Aktivator ausgewählt werden. Beispielsweise bietet sich hierzu eine Wärmezuführung, die Ausübung von Druck auf einzelne Wicklungslagen oder alternativ die Aufbringung einer chemischen Substanz an.

In einem weiteren Verfahrensschritt kann vorgesehen sein, dass wenigstens ein Teilsegment aus der Wicklung herausgetrennt und wieder in einer zur ursprünglichen Lage abweichenden Position am verbleibenden Restsegment der Wicklung aufgebracht wird. Ein oder mehrere Teilsegmente werden vorzugsweise herausgeschnitten und wieder zusammengesetzt.

Die Anzahl der herausgetrennten Segmente sowie Größe und Form der herausgetrennten Teilsegmente entscheidet sich nach den an den Rotor gestellten Anforderungen, die meistens durch den geplanten Einsatz des Motors definiert werden. Durch passende Wahl der Segmente kann mit dem nachfolgenden Zusammensetzen eine ideale Form des Rotors bzw. der Wicklung erreicht werden.

Beispielsweise ist es möglich, die geschnittenen Teilsegmente derart am verbleibenden Restsegment der Wicklung anzuordnen, so dass sich zum einen ein kreisrunder Außendurchmesser des Rotors ergibt und zum anderen am Außendurchmesser ein nachteiliger Metallring verhindert wird. Da hier relativ die meisten Eisenverluste entstehen würden, kann durch diese Maßnahme eine unerwünschte Eisenverlustquelle eliminiert werden. Die resultierende Rotorform ist jedoch nicht zwingend zylindrisch bzw. kreisrund. Generell können die Teilsegmente beliebige zusammengesetzt werden, um eine abweichende Rotorform zu erhalten und diese an die entsprechenden Voraussetzungen des Rotoreinsatzes anzupassen.

Erfindungsgemäß werden ein oder mehrere Kreissegmente mit bestimmten Radien, vorzugsweise Einheitsradien, aus der Wicklung herausgetrennt. Zweckmäßig werden genau vier Kreissegmente aus der Wicklung herausgetrennt. Jedes der einzelnen herausgetrennten Kreissegmente wird um eine senkrecht zur eigenen Kreisfläche verlaufende Achse verdreht und auf dem verbleibenden Restsegment der Wicklung aufgebracht. Besonders zweckmäßig ist eine Rotation der einzelnen Kreissegmente um ca. 180°, so dass sich im günstigsten Fall ein zusammengesetzter kreisförmiger bzw. zylindrischer Rotor ohne Metallring am Außendurchmesser ergibt. Das verbleibende Restsegment der Wicklung kann als Träger für den Rotor genutzt werden. Es entsteht kein Verschnitt bzw. Abfall während des Verfahrens.

Werden vier Kreissegmente herausgetrennt und wieder aufgebracht, so weist der entstehende Rotor vier Pole auf. Durch die Wahl der Segmentform bzw. die Anzahl der herausgetrennten Segmente kann die Anzahl der entstehenden Pole definiert werden. Dabei können beliebige Rotorformen mit einer variablen Polanzahl, insbesondere eine geradzahligen Polanzahl $2 \cdot p$ erzeugt werden.

Durch Aufbringen eines Spaltrohrs kann die gesamte Rotoreinheit zusätzlich fixiert werden.

Neben dem erfindungsgemäßen Verfahren ist die Erfindung auf einen Rotor für eine Synchron-Reluktanzmaschine mit den Merkmalen des Anspruchs 8 gerichtet.

Von Vorteil ist die Herstellung des erfindungsgemäßen Rotors nach einer der möglichen Ausführungsformen des erfindungsgemäßen Verfahrens, die bereits voranstehend ausführlich beschrieben wurden. Die einzelnen Vorteile und Einzelheiten des erfindungsgemäßen Rotors entsprechen offensichtlich denen des voranstehend beschriebenen erfindungsgemäßen Verfahrens, weshalb an dieser Stelle auf eine erneute Erläuterung verzichtet werden soll.

Ferner ist die Erfindung auf eine Synchron-Reluktanzmaschine gemäß Anspruch 9 gerichtet.

Weitere Vorteile und Einzelheiten der Erfindung ergeben sich aus den nachfolgenden Zeichnungen. Es zeigen:

Figur 1: den schematischen Aufbau des verwendeten Laminats in einer Seiten- und Draufsicht,

Figur 2: eine Prinzipskizze eines ersten Verfahrensschritts des erfindungsgemäßen Herstellungsverfahrens,

Figur 3: eine erläuternde Darstellung eines weiteren erfindungsgemäßen Verfahrensschritts und

Figur 4: eine schematische Darstellung einer Rotorausführung nach dem erfindungsgemäßen Herstellungsverfahren.

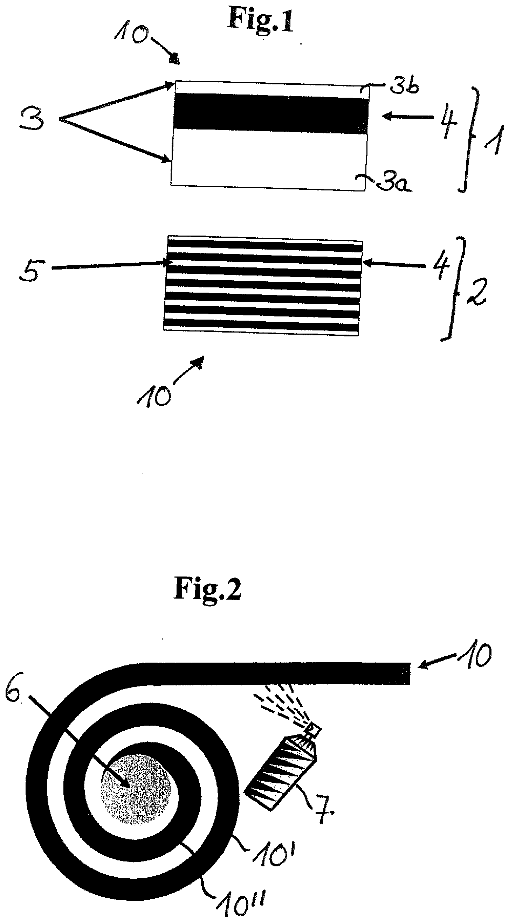

Figur 1 zeigt den grundsätzlichen Aufbau des als mehrschichtiges Material verwendeten Laminats 10. Die Darstellungen der Figur 1 zeigen zum einen eine Seitenansicht 1 sowie eine Draufsicht 2 auf das verwendete Laminat 10. Der Aufbau basiert im Wesentlichen auf einer Sandwich-Bauweise, die zwei isolierende Schichten 3 mit magnetisch nichtleitenden Eigenschaften vorsieht, die mittig eine magnetisch leitende Schicht 4 aufnehmen. Wird das Laminat 10 auf einen zylindrischen Grundkörper, insbesondere die Rotorwelle, gewickelt, so liegt die untere breitere isolierende Schicht 3a direkt auf der Rotorwelle auf. Mit der folgenden Wicklung wird die isolierende Schicht 3b stoffschlüssig mit der isolierenden Schicht 3a der folgenden Lage verbunden.

Darüber hinaus ist der Draufsicht 2 auf das Laminat 10 der Figur 1 zu entnehmen, dass die leitfähige Schicht 4 in axialer Richtung der Rotorachse durch isolierende Schichten 5 unterbrochen ist und sieben separate magnetisch leitende Schichten 4 gegeneinander isoliert existieren. Damit soll das Entstehen von Wirbelströmen in axialer Richtung während des Rotorbetriebs vermieden werden.

Figur 2 offenbart in einer Prinzipskizze den ersten Schritt des Herstellungsverfahrens des Rotors. Das mehrschichtige Laminat 10 wird auf die in der Zeichnung dargestellte Rotorwelle 6 direkt aufgewickelt. Das gleichzeitige Zuführen einer chemischen Substanz als Aktivator 7 ermöglicht eine stoffschlüssige Verbindung zwischen den einzelnen Laminatlagen 10, 10', 10". Alternativ zur Verwendung von chemischen Substanzen kann als Aktivator auch das Zuführen von Wärme sowie die Druckausübung auf die einzelnen Laminatlagen dienen. Der Grundkörper bzw. die Rotorwelle kann als zukünftige Motorwelle 6 genutzt werden.

Anstatt eines Laminats 10 kann alternativ ein isolierter Flachdraht Verwendung finden, der aus einem magnetisch leitfähigen Material besteht. Der Draht wird ebenfalls in einzelnen Lagen auf den zylindrischen Körper gewickelt, wobei die einzelnen Lagen stoffschlüssig, beispielsweise durch Wärmezuführung, Druckausübung oder einem sonstigen Aktivator, verbunden werden. Der Einsatz eines Flachdrahtes ermöglicht die variable Adaptierung der gewünschten Dicke des Flusssteges. Hierdurch kann für die zu bedienende Anwendung das Optimum ausgenutzt werden.

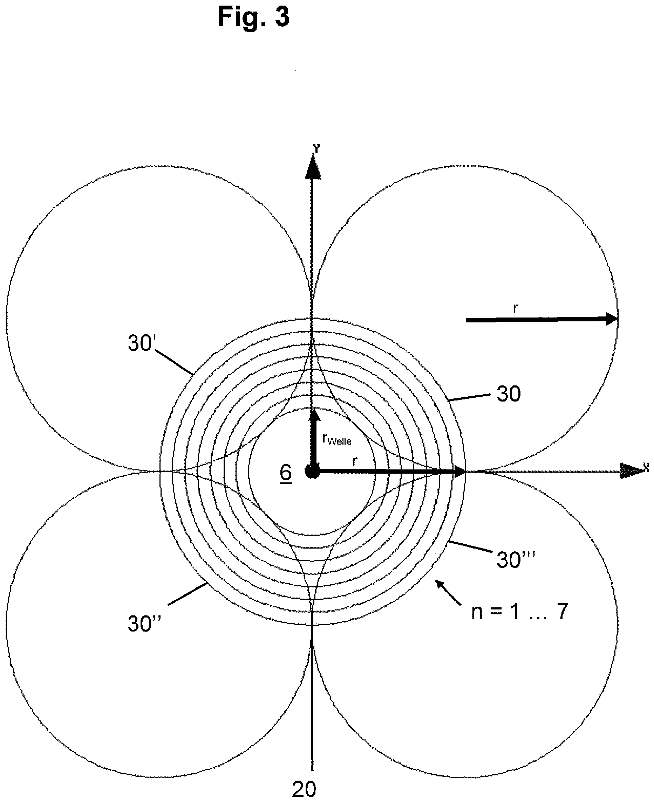

Figur 3 erläutert den nachfolgenden Verfahrensschritt des Auftrennens der mehrlagigen Rotorwicklung in vier separate Kreissegmente. Im Einzelnen zeigt die Zeichnung den auf die Rotorwelle 6 gewickelten Rotorkörper 20. Die gefertigte Wicklung 20 besteht aus insgesamt n = 7 Lagen des Laminats 10 gemäß Figur 1.

Aus dem Wicklungskörper 20 werden vier gleichgroße Kreissegmente 30, 30', 30", 30'" ausgetrennt, insbesondere ausgeschnitten. Die Größe der ausgetrennten Kreissegmente 30 wird durch den einheitlichen Radius r definiert, der im gezeigten Beispiel dem Radius r des kreisförmigen Wicklungskörpers 20 entspricht.

Im Anschluss werden die herausgetrennten Kreissegmente 30, 30', 30", 30'" um die senkrecht auf ihrer Segmentfläche stehende Drehachse um 180° verdreht und am verbleibenden Restsegment des Wicklungskörpers 20 befestigt, so dass sich im Ergebnis wieder ein kreisförmiger Rotorkörper ergibt.

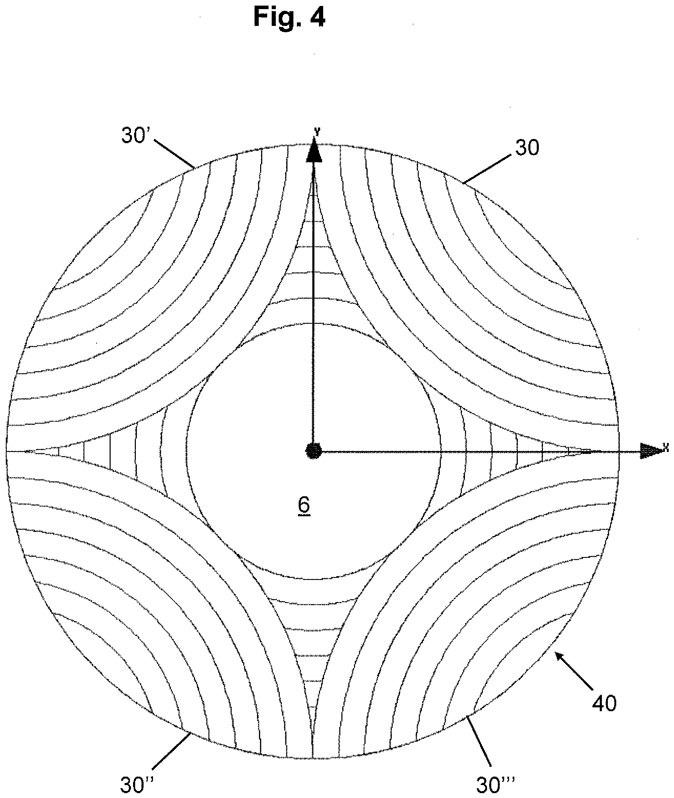

Der resultierende aus den einzelnen Teilsegmenten 30 zusammengesetzte Rotorkörper 40 ist der Figur 4 zu entnehmen. Bei geeigneter Wahl der Schnittgröße der Kreissegmente 30, 30', 30", 30'" ermöglicht eine zusammengesetzte kreisrunde Rotorform mit einem Radius, der dem Radius r der ursprünglichen Wicklungsform 20 entspricht. Hierzu gilt als erforderliche Voraussetzung für die Wahl des Radius der herausgetrennten Kreissegmente 30, 30', 30", 30'" als auch die Anzahl der Lagen n (Radius der Wicklung 20) die Formel

$$r_{Welle} = \sqrt{2} \cdot r - r \, ,$$

wobei r den Radius des fertigen Rotors definiert und $r_{Welle}$ für den Radius der die Wicklung tragenden Motorwelle 6 steht.

Durch das Ausführen des Rotors als Wicklung mit anschließendem Auftrennen des Rotors in Teilsegmente kann im Herstellungsprozeß genau auf die jeweiligen spezifischen Anforderungen an die Motoreigenschaften eingegangen werden. Durch die Anzahl der gewickelten Lagen n kann die Anzahl der gebogenen Flusssperren bestimmt werden. Das Verdrehen der geschnittenen Teilsegmente 30, 30', 30", 30'" ermöglicht eine Rotorausgestaltung gemäß Figur 4, die an ihrem Außendurchmesser keinen störenden Metallring aufweist. Eine unerwünschte Eisenverlustquelle kann eliminiert werden.

Grundsätzlich ist es nicht erforderlich, dass auf einen runden bzw. zylindrischen Körper gewickelt wird, um andere Schnitte erzielen zu können. Das Aufbringen eines Spaltrohres kann zudem die gesamte Einheit besser fixieren.

**Patentansprüche**

1. Verfahren zur Herstellung eines Rotors für einen Synchron-Reluktanzmotor, wobei wenigstens ein magnetisch nichtleitendes und wenigstens ein magnetisch leitendes Material auf einen Grundkörper (6), vorzugsweise zylindrischen Körper, gewickelt werden und die einzelnen Lagen miteinander verbunden werden,
wobei ein mehrschichtiges Material mit wenigstens einer magnetisch nichtleitenden und wenigstens einer magnetisch leitenden Schicht auf den Grundkörper (6) gewickelt wird, **dadurch gekennzeichnet, dass** das mehrschichtige Material mit mindestens zwei magnetisch nichtleitenden Schichten (3) ausgebildet ist, zwischen denen eine magnetisch leitende Zwischenschicht (4) eingebettet ist, wobei jeweils zwei magnetisch nichtleitende Schichten (3) der benachbarten Lagen des mehrschichtigen Materials stoffschlüssig miteinander verbunden werden, wobei ein oder mehrere Kreissegmente (30, 30', 30", 30'") mit bestimmtem Radius, insbesondere vier Kreissegmente (30, 30', 30", 30'"), aus der Wicklung (20) herausgetrennt und jeweils um eine senkrecht zur Kreissegmentfläche laufende Achse verdreht, insbesondere in etwa um auf dem Restsegment der Wicklung (20) aufgebracht werden.

2. Verfahren nach Anspruch 1, wobei als mehrschichtiges Material ein Laminat (10) verwendet wird, das vorzugsweise aus zwei magnetisch nichtleitenden Schichten (3) mit einer eingebetteten magnetisch leitenden Zwischenschicht (4) besteht.

3. Verfahren nach Anspruch 2, wobei die magnetisch leitende Zwischenschicht (4) in axialer Richtung des zylindrischen Grundkörpers (6) unterbrochen ist.

4. Verfahren nach einem der Ansprüche 1 bis 3, wobei mehrere Bahnen des mehrschichtigen Materials nebeneinander in axialer Richtung auf den zylindrischen Grundkörper (6) gewickelt werden.

5. Verfahren nach einem der Ansprüche 1 bis 4, wobei eine stoffschlüssige Verbindung durch einen Aktivator wie beispielsweise durch Wärmezufuhr und/oder Druckausübung und/oder Zuführung einer chemischen Substanz erzielt wird.

**6.** Verfahren nach einem der vorhergehenden Ansprüche, wobei wenigstens ein Segment aus der Wicklung herausgetrennt und in abweichender Position am verbleibenden Restsegment der Wicklung aufgebracht wird, insbesondere durch aufkleben.

**7.** Verfahren nach einem der vorhergehenden Ansprüche, dass die Wicklung (20) bzw. der aus Wicklungsteilsegmenten zusammengesetzte Rotor durch Aufbringen eines Spaltrohres zusätzlich fixiert wird.

**8.** Rotor für eine Synchron-Reluktanzmaschine, wobei der Rotor einen Grundkörper (6), vorzugsweise zylindrischen Körper, mit wenigstens einer Wicklung (20) aufweist, die aus wenigstens einem magnetisch nichtleitenden und wenigstens einem magnetisch leitenden Material besteht und die einzelnen Lagen der Wicklung miteinander verbunden sind, wobei die Wicklung (20) aus einem mehrschichtigen Material mit wenigstens einer magnetisch nichtleitenden und wenigstens einer magnetisch leitenden Schicht besteht, **dadurch gekennzeichnet, dass** das mehrschichtige Material mit mindestens zwei magnetisch nichtleitenden Schichten (3) ausgebildet ist, zwischen denen eine magnetisch leitende Zwischenschicht (4) eingebettet ist, wobei jeweils zwei magnetisch nichtleitende Schichten (3) der benachbarten Lagen des mehrschichtigen Materials stoffschlüssig miteinander verbunden sind, wobei ein oder mehrere Kreissegmente (30, 30', 30", 30''') mit bestimmtem Radius, insbesondere vier Kreissegmente (30, 30', 30", 30'''), aus der Wicklung (20) herausgetrennt und jeweils um eine senkrecht zur Kreissegmentfläche laufende Achse verdreht, insbesondere in etwa um 180°, auf dem Restsegment der Wicklung (20) aufgebracht sind.

**9.** Synchron-Reluktanzmaschine mit einem Rotor gemäß Anspruch 8.

**Claims**

**1.** Method for manufacturing a rotor for a synchronous reluctance motor, wherein at least one magnetically non-conductive material and at least one magnetically conductive material are wound onto a base body (6), preferably a cylindrical body, and the individual strata are connected to one another, wherein a multi-layer material with at least one magnetically non-conductive and at least one magnetically conductive layer are wound onto the base body (6), **characterized in that** the multi-layer material is formed with at least two magnetically non-conductive layers (3), between which a magnetically conductive intermediate layer (4) is embedded, wherein each two magnetically non-conductive layers (3) of the adjacent strata of the multi-layer material are connected to one another in a materially joined fashion, wherein one or more circular segments (30, 30', 30", 30''') with a specific radius, in particular four circular segments (30, 30', 30", 30''') are cut out of the winding (20) and each rotated about an axis running perpendicularly with respect to the circular segmental face, in particular by approximately 180°, and are applied to the residual segment of the winding (20).

**2.** Method according to Claim 1, wherein a laminate (10), which is preferably composed of two magnetically non-conductive layers (3) with an embedded, magnetically conductive intermediate layer (4), is used as the multi-layer material.

**3.** Method according to Claim 2, wherein the magnetically conductive intermediate layer (4) is interrupted in the axial direction of the cylindrical base body (6).

**4.** Method according to one of Claims 1 to 3, wherein a plurality of webs of the multi-layer material are wound one next to the other onto the cylindrical base body (6) in the axial direction.

**5.** Method according to one of Claims 1 to 4, wherein a materially joined connection is obtained by means of an activator such as, for example, by feeding in heat and/or exerting pressure and/or feeding in a chemical substance.

**6.** Method according to one of the preceding claims, wherein at least one segment is cut out of the winding, and is applied to the remaining residual segment of the winding in a different position, in particular by bonding.

**7.** Method according to one of the preceding claims, in that the winding (20) or the rotor which is composed of winding sub-segments is additionally secured by applying a can.

**8.** Rotor for a synchronous reluctance machine, wherein the rotor has a base body (6), preferably a cylindrical body, with at least one winding (20) which is composed of at least one magnetically non-conductive material and at least one magnetically conductive material, and the individual strata of the winding are connected to one another, wherein the winding (20) is composed of a multi-layer material with at least one magnetically non-conductive material and at least one magnetically conductive material, **characterized in that** the multi-layer material is embodied with at least two magnetically non-conductive layers (3), between which a magnetically conductive intermediate layer (4) is embedded, wherein in each case two magnetically non-conductive layers (3) of the adjacent strata of the multi-conductive material are connected to one another in a materially joined fashion, wherein one or more circular segments (30, 30', 30", 30''') with a specific radius, in particular four circular segments (30, 30', 30", 30'''), are cut out of the winding (20) and are each rotated about an axis running perpendicularly with respect to the circular segment face, in particular approximately by 180°, and are applied to the circular segment of the winding (20).

9. Synchronous reluctance machine having a rotor according to Claim 8.

**Revendications**

1. Procédé de fabrication d'un rotor pour un moteur à réluctance synchrone, au moins un matériau magnétiquement non conducteur et au moins un matériau magnétiquement conducteur étant enroulés sur un corps de base (6), de préférence un corps cylindrique, et les couches individuelles étant connectées les unes aux autres,
un matériau multicouche comprenant au moins une couche magnétiquement non conductrice et au moins une couche magnétiquement conductrice étant enroulé sur le corps de base (6), **caractérisé en ce que** le matériau multicouche est réalisé avec au moins deux couches magnétiquement non conductrices (3), entre lesquelles est incorporée une couche intermédiaire magnétiquement conductrice (4), deux couches magnétiquement non conductrices (3) des couches adjacentes du matériau multicouche étant à chaque fois connectées l'une à l'autre par liaison de matière, un ou plusieurs segments de cercle (30, 30', 30'', 30''') de rayon déterminé, en particulier quatre segments de cercle (30, 30', 30'', 30'''), séparés de l'enroulement (20) et tournés à chaque fois autour d'un axe s'étendant perpendiculairement à la surface du segment de cercle, en particulier d'environ étant appliqués sur le segment restant de l'enroulement (20) .

2. Procédé selon la revendication 1, dans lequel on utilise en tant que matériau multicouche un stratifié (10) qui se compose de préférence de deux couches magnétiquement non conductrices (3) avec une couche intermédiaire magnétiquement conductrice incorporée (4).

3. Procédé selon la revendication 2, dans lequel la couche intermédiaire magnétiquement conductrice (4) est interrompue dans la direction axiale du corps de base cylindrique (6).

4. Procédé selon l'une quelconque des revendications 1 à 3, dans lequel plusieurs bandes du matériau multicouche sont enroulées les unes à côté des autres dans la direction axiale sur le corps de base cylindrique (6).

5. Procédé selon l'une quelconque des revendications 1 à 4, dans lequel une connexion par liaison de matière est réalisée par le biais d'un activateur tel que par exemple par apport de chaleur et/ou par application de pression et/ou par apport d'une substance chimique.

6. Procédé selon l'une quelconque des revendications précédentes, dans lequel au moins un segment est séparé de l'enroulement et est appliqué dans une position écartée sur le segment résiduel restant de l'enroulement, en particulier par collage.

7. Procédé selon l'une quelconque des revendications précédentes, en ce que l'enroulement (20) ou le rotor constitué de segments partiels de l'enroulement est fixé en outre par application d'une gaine.

8. Rotor pour une machine à réluctance synchrone, le rotor présentant un corps de base (6), de préférence un corps cylindrique, avec au moins un enroulement (20) qui se compose d'au moins un matériau magnétiquement non conducteur et d'au moins un matériau magnétiquement conducteur et les couches individuelles de l'enroulement étant connectées les unes aux autres, l'enroulement (20) étant constitué d'un matériau multicouche avec au moins une couche magnétiquement non conductrice et au moins une couche magnétiquement conductrice, **caractérisé en ce que** le matériau multicouche est réalisé avec au moins deux couches magnétiquement non conductrices (3) entre lesquelles est incorporée une couche intermédiaire magnétiquement conductrice (4), deux couches magnétiquement non conductrices (3) des couches adjacentes du matériau multicouche étant à chaque fois connectées l'une à l'autre par liaison de matière, un ou plusieurs segments de cercle (30, 30', 30'', 30''') de rayon déterminé, en particulier quatre segments de cercle (30, 30', 30'', 30'''), séparés de l'enroulement (20) et tournés à chaque fois autour d'un axe s'étendant perpendiculairement à la surface du segment de cercle, en particulier d'environ 180°, étant appliqués sur le segment restant de l'enroulement (20).

9. Machine à réluctance synchrone comprenant un rotor selon la revendication 8.

# Fig.1

# Fig.2

# Fig. 3

# Fig. 4

**EP 2 626 989 B1**

**IN DER BESCHREIBUNG AUFGEFÜHRTE DOKUMENTE**

**In der Beschreibung aufgeführte Patentdokumente**

- JP H09117084 A
- DE 1814383 A1
- DE 2937351 A1